# EUROPEAN PATENT APPLICATION

(11) **EP 2 911 156 A1**
(43) Date of publication of application: **26.08.2015**
(21) Application number: 14156247.0
(22) Date of filing: 21.02.2014
(51) Int. Cl.: G21C 15/18, G21C 15/243, G21D 1/04

(54) **Decay heat removal system for a pressurized water reactor and corresponding pressurized water reactor**

(71) Applicant: AREVA GmbH, 91052 Erlangen (DE)
(72) Inventor: Reck, Markus, 91056 Erlangen (DE); Fuchs, Thomas, 50389 Wesseling (DE); Uhrig, Eckhard, 60599 Frankfurt am Main (DE)
(74) Representative: Kugler, Jörg

(57) **Abstract**

The invention relates to a decay heat removal system for a pressurized water reactor with a primary cooling circuit (4) and a secondary cooling circuit (10), the primary cooling circuit (4) and the secondary cooling circuit (10) being thermally coupled to each other by at least one steam generator (8), the secondary cooling circuit (10) comprising a main feedwater line (14) leading to the steam generator (8) and a main steam line (12) leading from the steam generator (8). In order to allow for a reliable removal of residual heat accumulating in the steam generator (8) under accident conditions, there is provided a passive emergency feeding system (28), comprising
• an auxiliary feeding line (32) leading from a cooling liquid reservoir (30) to the steam generator (8),
• a steam-driven pump (38) being switched into the auxiliary feeding line (32), and
• a steam supply line (42) leading from the main steam line (12) to the steam-driven pump (38).

## Description

The invention relates to a decay heat removal system for a pressurized water reactor according to the preamble of claim 1. The invention further relates to a corresponding pressurized water reactor.

A pressurized water reactor comprises a primary cooling circuit directly coupled to the nuclear equipment and a secondary cooling circuit being separated from the primary cooling circuit in terms of the cooling medium, the primary cooling circuit and the secondary cooling circuit being thermally coupled to each other by at least one steam generator. Furthermore the secondary cooling circuit comprises a main feedwater line leading to the steam generator and a main steam line leading from the steam generator. A feedwater pump being switched into the main feedwater line forces the secondary cooling medium, essentially water, to flow through the secondary cooling circuit, thereby receiving heat from the primary cooling circuit and releasing it to an external heat sink.

Removal of residual heat of a pressurized water nuclear reactor in case of station blackout or loss of ultimate heat sink is a challenging technical task. At loss of external and internal power supply or at loss of the ultimate heat sink, the feedwater pump cannot be operated anymore and, because of the residual decay heat, the water levels in the steam generators begin to decrease due to the evaporation of the contained water. Up to now, this challenge has been tackled by providing redundant equipment, for example emergency feedwater pumps powered by mobile diesel generators. For certain beyond-design accident scenarios (flooding, fire, devastation etc.), however, this can be no longer considered a satisfactory solution.

It is thus an objective of the present invention to provide an improved design of pressurized water reactor which allows for a reliable removal of residual heat accumulating in the steam generators of the secondary cooling circuit under accident conditions, in particular without the need for manual intervention and without the need for electrical energy supply.

According to the invention, the problem is solved by a decay heat removal system for a pressurized water reactor with the features of claim 1. A corresponding pressurized water reactor is subject of the independent claim 9.

Advantageous embodiments and enhancements are subject of the dependent claims and of the description below.

The invention is based upon the consideration that passive residual heat removal - i.e. without any need of electricity for actuation or operation of a safety system - is highly desirable in pressurized water nuclear reactors under accident conditions.

It is thus proposed to retrofit a fixed-units emergency system comprising a steam-driven pump to existing plant designs. Under accident conditions the steam-driven pump is supplied via a steam supply line with steam from the steam generator as driving means. Once actuated, the steam driven pump supplies cooling liquid, in particular water to the steam generator from a pool or reservoir via an auxiliary feeding line. In the steam generator the water is then available for residual heat removal. The steam leaving the steam-driven pump can be released to the outer atmosphere.

Preferably, the above-described system is combined with passive actuation means, in particular of the type pressure pulse transmitter. By the decreasing water level in the steam generator, which goes along with the above-mentioned accident conditions, steam enters the passive pressure pulse transmitter which is hence actuated and opens itself a shut-off valve which in turn allows for supply of steam via the steam supply line to the steam-driven pump. In the same manner and basically at the same time, a shut-off valve in the auxiliary feeding line gets opened which allows for the transport of the water from the reservoir to the steam generator.

All in all, the passively actuated and passively working system allows for completely passive removal of residual heat in pressurized water nuclear reactors in case of station blackout or loss of ultimate heat sink. It exhibits enhanced reliability compared to mobile equipment and no external accessibility is required.

A particularly advantageous embodiment of the invention is subsequently described in more detail with respect to the drawings, in which in a purely schematic manner
- FIG. 1: shows a partial cross section of a nuclear power plant with a pressurized water reactor (PWR) and an emergency feeding system for the reactor's secondary cooling circuit, and
- FIG. 2: shows a passive actuation system, triggering corresponding valves in dependence on high or low liquid level in the vessel of a steam generator of the secondary cooling circuit.

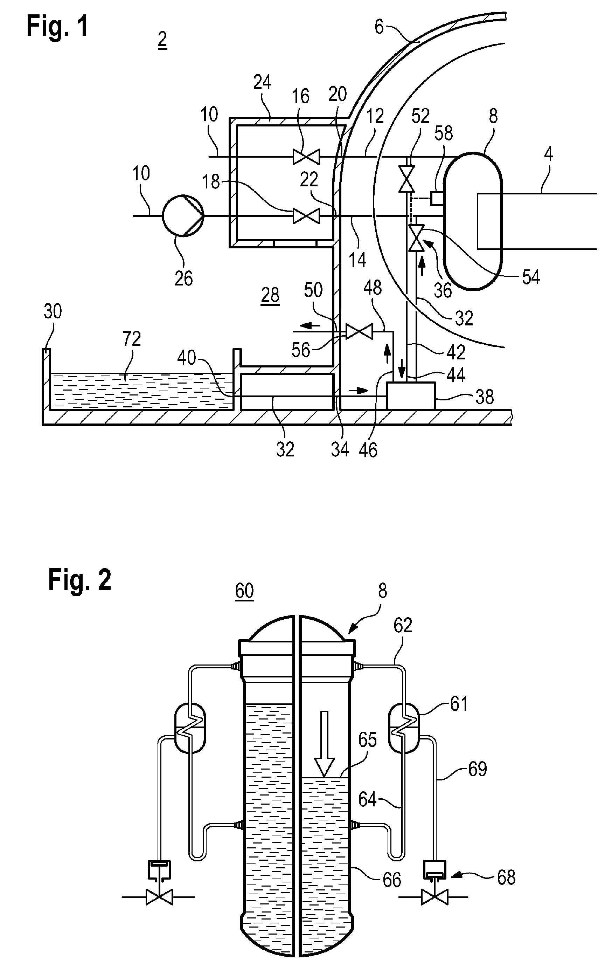

FIG. 1 shows a partial cross section of a nuclear power plant 2 with a pressurized water reactor (PWR). The reactor comprises a reactor pressure vessel (not shown) in which the nuclear chain reaction takes place, which is part of a primary cooling circuit 4 located inside a reactor building wall 6, the reactor building wall 6 fluidly isolating the interior from the outside environment. The hot leg of the primary cooling circuit 4 is thermally coupled to a steam generator 8 which is part of a secondary cooling circuit 10. The steam generator 8 forms a heat exchanger in which during normal operation of the power plant 2 heat from a primary cooling medium - essentially water - flowing in the primary cooling circuit 4 is transferred to a secondary cooling medium flowing in the secondary cooling circuit 10, thereby vaporizing the secondary cooling medium. The thus generated steam in the secondary cooling circuit 10 leaves the steam generator 8 via a main steam line 12 and is led to a steam turbine (not shown) located outside the reactor building wall 6, thereby producing electricity via an electrical generator coupled to the steam turbine. Downstream the steam turbine the expanded steam is condensed and thus returned to a liquid state in a steam condenser (not shown). The thus liquefied secondary cooling medium, called feedwater, is then led back to the steam generator 8 via a main feedwater line14, in this way closing the secondary cooling circuit 10.

A main shut-off valve 16 switched into the main steam line 12 and a main shut-off valve 18 switched into the main feedwater line 14 permit isolation of the external section - outside the reactor building wall 6 - of the secondary cooling circuit 10 from the internal section - inside the reactor building wall 6. Both shut-off valves 16, 18 are preferably located directly after/before the corresponding lead-through 20, 22 in a common valve chamber or valve compartment 24 attached to the outside of the reactor building wall 6, so that in case of emergency they can be operated manually without an operator entering the reactor building / the containment.

In order to facilitate the transport of the secondary cooling medium in the secondary cooling circuit 10 during normal reactor operation, an electrically driven feedwater pump 26 is switched into the main feedwater line 14 (principle of forced flow). In the unlikely event of a station blackout with loss of the internal energy supply of the nuclear power plant 2 the feedwater pump 26 ceases to operate, thus compromising heat removal via the secondary cooling circuit 10.

In order to cope with such a situation, a completely passive emergency feeding system 28 for feeding the steam generator 8 with a cooling liquid from a corresponding reservoir 30 is provided. Hence, the system can also be called emergency cooling system.

The emergency feeding system 28 comprises an auxiliary feeding line 32 leading from the cooling liquid reservoir 30, also called storage pool, to the steam generator 8. In particular, according to the exemplary embodiment shown in FIG. 1, the cooling liquid reservoir 30 is realized as an external reservoir located outside the reactor building wall 6. During standby it is filled with a suitable cooling liquid, typically water at ambient temperatures (ca. 20 °C). The auxiliary feeding line 32 is thus led through the reactor building wall 6 at a lead-through 34. The outlet end 36 of the auxiliary feeding line 32 can either discharge directly into the steam generator 8 or - as shown in FIG. 1 - into the main feedwater line 14 (for example by a T-junction), namely into its section inside the reactor building wall 6.

In order to facilitate transport of the cooling liquid 72 from the reservoir 30 to the steam generator 8, a steam-driven pump 38 is switched into the auxiliary feeding line 32, thus dividing the auxiliary feeding line 32 into a suction section leading from the inlet end 40 to the steam-driven pump 38 and a pressure section leading from the steam-driven pump 38 to the outlet end 36. According to the exemplary embodiment shown in FIG. 1, the steam-driven pump 38 is located inside the reactor building wall 6.

During an emergency feeding procedure the steam-driven pump 38 is driven / powered by the steam which is generated in the steam generator 8 of the secondary cooling circuit 10. To this end, there is a steam supply line 42 leading from the steam generator 8 to the steam inlet 44 of the steam-driven pump 38. At the inlet side the steam supply line 42 can either be directly connected to the steam generator 8 or - like in FIG. 1 - to the main steam line 12, namely to its section inside the reactor building wall 6. The expanded steam leaving the steam-driven pump 38 at its steam outlet 46 is led via a steam outlet line 48 into the atmosphere outside the reactor building wall 6. The steam outlet line 48 therefore comprises a lead-through 50 through the rector building wall 6.

During normal operation of the nuclear reactor, the auxiliary feeding line 32 and the steam supply line 42 have to be isolated from the secondary cooling circuit 10. To this end, there is a shut-off valve 52 switched into the steam supply line 42 leading to the steam-driven pump 38, and a shut-off valve 54 is switched into the pressure section of the auxiliary feeding line 32. Similarly, according to the exemplary embodiment shown in FIG. 1, there is a shut-off valve 56 switched into the steam outlet line 48, enabling isolation of the reactor building interior from the outer environment.

During normal operation of the nuclear reactor the shut-off valves 52, 54, 56 are closed. Upon actuation of the emergency feeding system 28 they get switched open basically at the same time (i.e. simultaneously) by a passive actuator 58 to be discussed below, in particular when the liquid level inside the steam generator 8 drops below a certain (pre-defined) value due do intensified vaporization.

Once the emergency feeding system 28 is activated, the steam accumulated in the steam generator 8 is led via the steam supply 42 line to the steam-driven pump 38 and drives it. Afterwards, the expanded steam is blown out into the environment via the steam outlet line 48. By virtue of the steam-driven pump 38 cooling liquid 72 is pumped from the external reservoir 30 into the steam generator 8 via the auxiliary feeding line 32, thus replenishing the liquid cooling medium in the steam generator 8 and putting the flow in the secondary cooling circuit 10 into operation again. Since relatively cold cooling liquid 72 is held in the reservoir 30, a good cooling efficiency is achieved - at the price of inducing high thermal strains into the corresponding components upon the actuation of emergency feeding, which however, is a negligible drawback in such situations.

In the long run, for example over a couple of days until the reservoir 30 is empty, this can lead to an intermittent operation of the steam-driven pump 38 with strongly varying flow rates. Preferably, the steam-driven pump 38 is adapted to such varying modes of operation without the help of an active control system or the like. In a particularly advantageous embodiment this is facilitated by a robust steam-driven pump 38 of the type "turbine water lubricated" (TWL) pump, comprising a steam turbine and a compressor pump on a common shaft.

In order to keep the emergency cooling system completely passive, the actuation system for the valves 52, 54, 56 is preferably designed to operate in a passive and automatic manner as well. To this end, the passive actuator 58 is realized by a socalled passive pressure pulse transmitter (PPPT) 60 being coupled to the steam generator 8. The overall actuation system is indicated only schematically in FIG. 1 via the dotted lines representing the corresponding functional relationship (a dotted line to valve 56 being omitted in the figure).

In FIG. 2 a more detailed overview of the design and of the mode of operation of the PPPT 60 is given. In principle, the PPPT 60 comprises a small heat exchanger 61, on the primary side being connected via tubes 62, 64 to the vessel 66 of the steam generator 8 at two different heights. Its primary and secondary sides normally contain cold water as indicated in the left half of the figure. If the liquid level 65 in the vessel 66 drops below a given value, as indicated in the right half of the figure, the primary side fills automatically with steam which heats the secondary side. When a defined gauge pressure is reached, a valve 68 connected to the secondary side via tube 69 will be switched. This valve 68 can either be one of the shut-off valves 52, 54, 56 themselves, or - preferably - a pilot valve acting on one or several of these shut-off valves. Thus, the PPPT 60 provides a passive actuation of the shut-off valves 52, 54, 56 on high or low liquid level 65 in the vessel 66 with no need of any I&C triggering and without any electric energy supply.

All in all, the emergency feeding system 28 according to the invention facilitates decay heat removal from the primary cooling circuit 4 via the secondary cooling circuit 10 by feeding cold cooling liquid 72 (typically water) from an external reservoir 30 to the secondary cooling circuit 10, thus replacing vaporized cooling medium and putting the secondary cooling circuit 10 back into operation. The steam-driven pump 38 works in a passive manner by virtue of the steam accumulating under accident conditions in the steam generator 8 switched into the secondary cooling circuit 10. The feeding system 28 is completely passive and well-suited for station blackout scenarios, since the actuation means are passive as well and no active control elements are needed. The system is suitable for retrofitting to existing PWRs since only minimal changes to existing fluid lines and only little space inside the reactor building wall 6 are needed.

Although the invention has been described with respect to a PWR in which the primary reactor cooling circuit 4 acts as a heat source for the steam generator 8 of the secondary cooling circuit 10, various generalizations are possible. For example, the steam generator 8 might be thermally coupled to other heat sources as well.

Furthermore, the reservoir 30 is not necessarily an external reservoir as described with respect to the exemplary embodiment above. Instead it can be located inside the reactor building, or there may be several reservoirs at various locations at the site of the nuclear power plant. Similarly, the steam-driven pump 38 can be located at various locations inside or outside the reactor building, provided that the corresponding fluid lines are arranged accordingly.

Instead of the shut-off valve 54 in the the auxiliary feeding line 32 being triggered by the PPPT 60 there can be a simple (non-actuated) non-return valve or check valve being switched into the auxiliary feeding line 32. Alternatively, it may be omitted. Besides that, the shut-off valve 56 in the steam outlet line 48 is not mandatory and may be omitted. Instead of blowing the expanded steam out into the atmosphere, the steam outlet line 48 may discharge into the reactor building / into the containment and/or into a water pool / liquid pool or the like for the purpose of condensation of the steam. The steam-driven pump 38 may also be realized as an injector pump or a piston pump. Instead of the steam supply line 42 being connected to the main steam line 12 on the entry side, it may be connected to an auxiliary steam generating system for the purpose of providing steam as a driving means for the steam-driven pump 38.

**List of reference symbols**

| | | | |
|---|---|---|---|
| 2 | nuclear power plant | 61 | heat exchanger |
| 4 | primary cooling circuit | 62 | tube |
| 6 | reactor building wall | 64 | tube |
| 8 | steam generator | 65 | liquid level |
| 10 | secondary cooling circuit | 66 | vessel |
| 12 | main steam line | 68 | valve |
| 14 | main feedwater line | 69 | tube |
| 16 | main shut-off valve | 72 | cooling liquid |
| 18 | main shut-off valve | | |
| 20 | lead-through | | |
| 22 | lead-through | | |
| 24 | valve compartment | | |
| 26 | feedwater pump | | |
| 28 | emergency feeding system | | |
| 30 | reservoir | | |
| 32 | auxiliary feeding line | | |
| 34 | lead-through | | |
| 36 | outlet end | | |
| 38 | steam-driven pump | | |
| 40 | inlet end | | |
| 42 | steam supply line | | |
| 44 | steam inlet | | |
| 46 | steam outlet | | |
| 48 | steam outlet line | | |
| 50 | lead-through | | |
| 52 | shut-off valve | | |
| 54 | shut-off valve | | |
| 56 | shut-off valve | | |
| 58 | passive actuator | | |
| 60 | passive pressure pulse transmitter (PPPT) | | |

## Claims

1. Decay heat removal system for a pressurized water reactor with a primary cooling circuit (4) and a secondary cooling circuit (10), the primary cooling circuit (4) and the secondary cooling circuit (10) being thermally coupled to each other by at least one steam generator (8), the secondary cooling circuit (10) comprising a main feedwater line (14) leading to the steam generator (8) and a main steam line (12) leading from the steam generator (8),
**characterized by** a passive emergency feeding system (28) comprising
• an auxiliary feeding line (32) leading from a cooling liquid reservoir (30) to the steam generator (8),
• a steam-driven pump (38) being switched into the auxiliary feeding line (32), and
• a steam supply line (42) leading from the main steam line (12) to the steam-driven pump (38).

2. Decay heat removal system according to claim 1, wherein a shut-off valve (54) is switched into the auxiliary feeding line (32), and wherein the shut-off valve (54) is actuated by a passive actuator (58) in dependence on the level of cooling liquid inside the steam generator (8).

3. Decay heat removal system according to claim 1 or 2, wherein a shut-off valve (52) is switched into the steam supply line (42), and wherein the shut-off valve (52) is actuated by a passive actuator (58) in dependence on the level of cooling liquid inside the steam generator (8).

4. Decay heat removal system according to claim 2 or 3, wherein the respective passive actuator (58) comprises a passive pressure pulse transmitter (60).

5. Decay heat removal system according to any of claims 1 to 4, wherein the reservoir (30) is an external reservoir placed outside the reactor building.

6. Decay heat removal system according to any of claims 1 to 5, wherein the steam-driven pump (38) is placed inside the reactor building.

7. Decay heat removal system according to any of claims 1 to 6, comprising a steam outlet line (48) leading from the steam-driven pump (38) into the atmosphere outside the reactor building.

8. Decay heat removal system according to any of claims 1 to 7, wherein the steam-driven pump (38) is a turbo pump comprising a steam turbine and a compressor pump mechanically coupled to each other.

9. Pressurized water reactor with a primary cooling circuit (4) and a secondary cooling circuit (10), the primary cooling circuit (4) and the secondary cooling circuit (10) being thermally coupled to each other by at least one steam generator (8), the secondary cooling circuit (10) comprising a main feedwater line (14) leading to the steam generator (8) and a main steam line (12) leading from the steam generator (8),
**characterized by** a passive emergency feeding system (28) comprising
• an auxiliary feeding line (32) leading from a cooling liquid reservoir (30) to the steam generator (8),
• a steam-driven pump (38) being switched into the auxiliary feeding line (32), and
• a steam supply line (42) leading from the main steam line (12) to the steam-driven pump (38).
